Europäisches Patentamt

European Patent Office

Office européen des brevets

(11) Publication number: **0 275 053 B1**

# EUROPEAN PATENT SPECIFICATION

(45) Date of publication of patent specification: **24.07.91**    (51) Int. Cl.5: **H01B 3/12,** H01G 4/12, C04B 35/46

(21) Application number: **88100204.2**

(22) Date of filing: **09.01.88**

(54) Dielectric composition for use in multilayer ceramic capacitors.

(30) Priority: **13.01.87 US 3260**

(43) Date of publication of application:
**20.07.88 Bulletin 88/29**

(45) Publication of the grant of the patent:
**24.07.91 Bulletin 91/30**

(84) Designated Contracting States:
**BE CH DE FR GB IT LI LU NL**

(56) References cited:
**EP-A- 0 088 009**
**EP-A- 0 134 072**

(73) Proprietor: **E.I. DU PONT DE NEMOURS AND COMPANY**
**1007 Market Street**
**Wilmington Delaware 19898(US)**

(72) Inventor: **Burn, Ian**
**9 Pierson Drive, RD 1**
**Hockessin Delaware 19707(US)**

(74) Representative: **von Kreisler, Alek,**
**Dipl.-Chem. et al**
**Patentanwälte Von Kreisler-Selting-Werner,**
**Deichmannhaus am Hauptbahnhof**
**W-5000 Köln 1(DE)**

## Description

The invention relates to ceramic compositions with dielectric constants above 5000 which are used in multilayer ceramic capacitors having internal copper electrodes.

## BACKGROUND OF THE INVENTION

Because of its high conductivity and low cost, copper is an ideal metal for the internal electrodes in multilayer ceramic capacitors (MLC's). However, the use of copper electrodes in MLC's has been held back because of the following technical difficulties:

(a) The problem of reproducibly and reliably processing multilayer ceramic devices with many layers of copper electrodes, and

(b) The problem of achieving high dielectric constants for ceramic compositions which must sinter below the melting point of copper (1083°C) and which also must be resistant to reduction in the atmospheres of low oxygen content that are needed to protect copper from oxidation when the multilayer ceramic/metal structure is fired.

Furthermore, ceramic compositions with dielectric constants (K) greater than 1000 suitable for use in MLC's with copper electrodes are described in U.S. 4,101,952. These compositions are based on alkaline earth titanates with additions of alkaline earth aluminoborate glass to achieve sintering at 900-1080°C. The compositions are free from readily reducible oxides such as lead oxide, bismuth oxide, and cadmium oxide, and from volatile fluorides as well. Thus, they are chemically stable during the sintering process needed for MLC's with copper electrodes. However, the dielectric constant of these compositions is ≤ 4000 which is too low to provide adequate capacitance in the capacitors of small size normally used for decoupling and by-pass applications and meeting the A.E.I. specifications on temperature stability of Y5V or Z5U. Accordingly, there exists a substantial need for dielectric compositions which (1) are chemically stable and resistant to reduction, (2) can be sintered to a dense hermetic structure below the melting point of copper, and (3) have dielectric constants significantly higher than those which were achieved heretofore.

## BRIEF DESCRIPTION OF THE INVENTION

In its primary aspect, the invention is directed to a dielectric composition consisting essentially of a donor-doped BaTiO$_3$ having an intergranular phase of flux containing both glass-forming and glass-modifying ions, characterized stoichiometrically by the following criteria:

(a) The ratio of A site ions to B site ions in the doped BaTiO$_3$,

$$\frac{N_A + N_D^{3+}}{N_B + N_D^{5+} + N_C} = 1.02\text{-}1.10,$$

wherein

N$_A$ is the number of divalent A site ions selected from Ba$^{2+}$, Ca$^{2+}$, Sr$^{2+}$, Mg$^{2+}$ and mixtures thereof;

N$_B$ is the number of tetravalent B site ions selected from Ti$^{4+}$, Zr$^{4+}$ and mixtures thereof;

N$_C$ is the number of donor compensating ions selected from Mn$^{2+}$, Mn$^{3+}$, Ni$^{2+}$, Cr$^{3+}$, Co$^{2+}$, Co$^{3+}$, Ga$^{3+}$ and mixtures thereof;

N$_D$ is the number of donor ions of charge 3+ or 5+ selected from trivalent rare earth ions and mixtures thereof or Ta$^{5+}$, Nb$^{5+}$, and mixtures thereof, respectively;

(b) The ratio of donor ions (N$_D$) to total cations (N$_T$), N$_D$/N$_T$ = 0.5-3.0%, wherein N$_T$ = N$_A$ + N$_B$ + N$_C$ + N$_D$ + N$_G$ + N$_M$;

(c) N$_C$/N$_D$ is at least 0.20;

(d) The ratio of glass-forming ions (N$_G$) to total cations (N$_T$), N$_G$/N$_T$ = 0.5-3.5% wherein N$_G$ is the number of glass forming ions selected from B$^{3+}$, Si$^{4+}$, Ge$^{4+}$, P$^{5+}$ and mixtures thereof;

(e) The ratio of glass-modifying ions (N$_M$) to the total number of cations (N$_T$), N$_M$/N$_T$ = 1.5-5.0%, wherein N$_M$ is the number of glass modifying ions elected from Li$^+$, Cu+, Zn$^{2+}$ and mixtures thereof.

In a second aspect, the invention is directed to a composition for preparing by firing in a low oxygen-containing atmosphere the aforementioned donor-doped BaTiO$_3$ having an intergranular layer of flux containing both glass-forming and glass-modifying ions consisting essentially of an admixture of finely divided particles of oxides of $BaTiO_3$, oxides of glass-forming cations, oxides of glass-modifying cations. A site dopant oxide(s), B site dopant oxide(s), oxides of donor ions and oxides of donor compensating ions, characterized stoichiometrically by the following criteria:

(a) The molar ratio of A site oxide(s) to B site oxide(s) is 1.02-1.10;

(b) The molar ratio of donor oxide(s) to total oxide(s) is 0.5 to 3.0%;

(c) The molar ratio of donor-compensating oxide(s) to donor oxide(s) is at least 0.20;

(d) The molar ratio of glass-forming oxide(s) to total oxide(s) is 0.5 to 3.5%; and

(e) The molar ratio of glass-modifying oxide(s) to the total oxide(s) is 1.5-5.0%.

## PRIOR ART

### U.S. 4,101,952, Burn

This patent is directed to low-firing monolithic ceramic capacitors having a K value of >1000 in which the dielectric layers consist of 5-15% noncrystalline glass (alkaline earth alumino borate glass) and 95-85% of a crystalline phase (alkaline earth metal titanate) and the electrodes are made of base metal.

### U.S. 4,234,367, Herron et al.

The Herron patent is directed to a method of forming glass-ceramic composite structures with copper metallurgy (1) by printing a copper conductor pattern on a green sheet of a crystallizable glass, (2) laminating a second crystallizable glass green sheet on the printed copper pattern and (3) firing the composite structure first in $H_2/H_2O$ to burn out the binder and then in an inert atmosphere to sinter the glass.

### U.S. 4,308,570, Burn

This second Burn patent is directed to monolithic ceramic capacitors with copper internal electrodes having a K value of about 10 consisting of 10-50% wt. nonreducible glass (alkaline earth borate) and 90-50% wt. nonreducible crystalline ceramic phase ($MgTiO_3$).

### U.S. 4,551,357, Takeuchi

This patent is directed to a process for making ceramic circuit boards by which a Cu/polymer paste is printed on a dielectric green sheet. The organic binder of the Cu paste is thermally more stable than the organic binder of the dielectric. The printed green sheet is heated in an oxidizing atmosphere below the decomposition point of the organic binder and then fired in a low oxygen-containing atmosphere to decompose the organic material.

### EPO 0155363

A low temperature-sinterable ceramic dielectric composition comprising (a) 100 parts of $BaTiO_3$ doped with 0.02 to 0.05 mole Mg, Zr or Ca and (b) 0.2-10 parts of $B_2O_3$ and a metal oxide selected from BaO, MgO, ZnO, BaO and CaO.

### EPO 0155364

A low temperature-sinterable ceramic dielectric composition comprising (a) 100 parts of $BaTiO_3$ doped with 0.02-0.05 mole Mg, Zn, Sr or Ca and (b) 0.2-10 parts $B_2O_3$ or $SiO_2$.

### EPO 0155365 and 0155366

A low temperature-sinterable ceramic dielectric composition comprising (a) 100 parts of $BaTiO_3$ doped with 0.02-0.05 mole Mg, Zn, Sr or Ca and (b) 0.2-10 parts of a mixture of $Li_2O$ and $SiO_2$.

### EPO 0164841

This reference is directed to ceramic dielectric compositions on electrically insulating glass, organic binder and an inorganic peroxide to facilitate burnout of the binder.

EPO 0088009

This reference is directed to low-firing ceramic dielectrics having a K value of < 2500 and comprising 80-94% barium, titanate, 1-3% neodymium oxide, 0-4% bismuth oxide, 2-5% bismuth titanate and 2-8% glass frit.

EPO 0134072

This reference is directed to high-firing ceramic capacitors having a K value of < 5000 in which the dielectric layers comprise barium titanate, niobium pentoxide and gadolinium sesquioxide.

DETAILED DESCRIPTION OF THE INVENTION

A. Dielectric Composition

The dielectric compositions of the invention are based on barium titanate and are free from fluorides and reducible oxides, or their precursors. Donor dopants selected from pentavalent ions such as niobium or tantalum, and from trivalent rare-earth ions such as neodymium are used together with zirconium oxide as Curie temperature depressors, despite the fact it is well known that donor dopants increase the tendency of titanate dielectrics to become semiconducting when heated in atmospheres of low oxygen content. Low sintering temperatures are achieved by the additions of a small amount of flux consisting of a glass-forming oxide, such as boron oxide, together with zinc oxide and/or lithium oxide as modifiers. The flux may also include aluminum oxide and/or an alkaline earth oxide such as barium oxide. In addition, an acceptor dopant, such as manganese oxide, must also be present in the barium titanate or added with the flux. High dielectric constant and high resistivity (absence of semiconduction) are achieved by arranging simultaneously (a) partial compensation of the donor dopants with acceptors and (b) precise balance of cation stoichiometry according to certain requirements which have been discovered.

We define the constituents of the dielectric composition as follows:

$N_A$ = No. of divalent A site ions ($Ba^{2+}$, $Ca^{2+}$, $Sr^{2+}$, $Mg^{2+}$)

$N_B$ = No. of four valent B site ions ($Ti^{4+}$, $Zr^{4+}$)

$N_D$ = No. of donor ions ($Nb^{5+}$, $Nd^{3+}$, $Ta^{5+}$, trivalent rare earth ions)

$N_C$ = No. of donor compensating (acceptor) ions ($Mn^{2+}$, $Mn^{3+}$, $Co^{2+}$, $Ni^{2+}$, $Cr^{3+}$, $Co^{3+}$, $Ga^{3+}$)

$N_G$ = No. of glass-forming ions ($B^{3+}$, $Si^{4+}$, $Ge^{4+}$, $P^{5+}$ etc.)

$N_M$ = No. of flux-modifier ions ($Li^+$, $Zn^{2+}$, $Cu^+$)

$$\text{and} \quad S = \frac{N_A + N_D^{3+}}{N_B + N_D^{5+} + N_C}$$

Donor-acceptor balance is determined by the ratio $N_C/N_D$ which must be greater than about 0.20 to prevent semiconduction. The parameter S defines the stoichiometry of the dielectric and includes the donors and compensating ions in their expected position for substitution in the barium titanate lattice and should preferably have a value of about 1.03. If S is below about 1.02 the ceramic will generally be semiconducting, whereas if S is higher than about 1.09 dielectric constant will decrease, as is the case if $N_G$ is too high. The glass-forming oxides which form an intergranular sintering phase with the glass modifier oxides, can influence stoichiometry by dissolving an unknown amount of divalent A site ions during the sintering process. Accordingly, both the amount of the sintering phase and its composition influence the final stoichiometry of the dielectric. Semiconduction can result from this effect if the value of S is at the low end of the range. If premade barium titanate is used, then its stoichiometry must also be taken into account in determining S.

B. Test Procedures

Capacitance

Capacitance is a measure of the capability of a material to store an electrical charge expressed mathematically, C = KAN divided by t, where K is dielectric constant, A equals area overlap of electrodes, N is number of dielectric layers, and t is thickness of dielectric layer.

The units of capacitance are farads or fractions thereof such as microfarads ($10^{-6}$ farad), nanofarads ($10^{-9}$ farad) or picofarads ($10^{-12}$ farad).

## Dissipation Factor

Dissipation factor (DF) is a measure of the phase difference between voltage and current. In a perfect capacitor the phase difference would be 90°. However, in practical dielectric systems, this phase difference is less than 90° by an amount $\sigma$ because of leakage and relaxation losses. In particular, DF is the tangent of the angle $\sigma$.

## Insulation Resistance

Insulation Resistance (IR) is a measure of the ability of a changed capacitor to withstand leakage in DC current. Insulation resistance expressed as ohm.farads ($\Omega F$) is a constant for any given dielectric regardless of capacitance.

## Temperature Coefficient of Capacitance (TCC)

The temperature coefficient of capacitance is a measure of the change of capacitance as a function of temperature with respect to the capacitance at 25°C. Y5U and Y5V are A.E.I. specifications for TCC which permit capacitance change between -30°C and 85°C of not more than +22%, -56% and +22%, -83%, respectively.

Capacitance and dissipation factors were measured using a Hewlett-Packard HP4192A multi-frequency LCR meter. Insulation resistance was measured using a Hewlett-Packard 4140B pA meter after charging the capacitor for 2 mins with 100 VDC applied.

The thickness and area of the dielectric layers were measured using polished sections of the capacitors and optical microscopy. The dielectric constant was calculated using the equation:

$$K = \frac{C}{A} \cdot t$$

where C is the capacitance of the capacitor

A    - is the area of small electrode in contact with the dielectric layer.

t    - is the thickness of the dielectric layer.

All capacitors were aged for at least 15 hours after firing before making the electrical measurements. It is common that the capacitance and dissipation factor decrease within this time period at an aging rate characteristic of the material. Typical capacitance aging rates are 1 to 5% per decade (hrs).

## C. Firing Process

Multilayer capacitors (MLC's) with internal copper electrodes are fired in a furnace which has been sealed to contain a controlled atmosphere without significant leakage. Use of atmospheres with controlled oxygen partial pressures for firing MLC's with base metal electrodes is well-known. Atmospheres of $N_2$, $H_2$ + $N_2$, $CO$ + $CO_2$ + $N_2$ have been described, and a variety of other atmospheres including $H_2$ + $H_2O$ + $N_2$, and $CO_2$ + $H_2$ + $N_2$ can be used. An atmosphere of $CO_2$ + $H_2$ + $N_2$ is preferred because of both the atmosphere control provided by such a mixture, and for safety reasons. Only nonexplosive levels of $H_2$ are needed, and the storage and piping of carbon monoxide are not required.

The green MLC's can be prefired at 400°C in $N_2$ to remove most of the organic binders or the MLC's can be sintered directly without prefiring. A convenient heating rate is 25°C/min to 750°C decreasing to 10°C/min to 1050°C. The soak period is usually 2-2.5 hours at 1050-1065°C, and then the furnace is cooled at its natural rate. A gas mixture of $N_2$ + $CO_2$ + $H_2$ circulates through the furnace during the entire cycle with an adequate flow rate to maintain a slight positive pressure. The $CO_2/H_2$ ratio determines the oxygen partial pressure. Good results have been achieved for $CO_2/H_2$ ratios of 20/1 to 65/1 which produce oxygen partial pressures of $1\times10^{-9}$ - $1\times10^{-10}$ atm at 1050°C, as verified by an oxygen sensor installed in the hot zone of the furnace. If the atmosphere is more reducing, then delamination of the MLC's is likely to occur due to premature sintering of the electrodes and/or the dielectric can become semiconducting. If the atmosphere is more oxidizing, the copper electrodes will react excessively with, or dissolve into, the dielectric. A slight reaction between the electrodes and ceramic can be beneficial to good electrode bonding but should be minimized to avoid variations in properties for differing dielectric thicknesses and differing numbers of electrodes.

D. Electrodes

Because of their good printing characteristics, electrode pastes used for MLC's that are fired in the air usually contain an ethyl cellulose binder. However, previous experience and some preliminary experiments indicated that uniformly sintered internal copper electrodes in MLC's could not be obtained with this type of electrode paste. This was particularly the case for MLC's with a large number of layers because of the difficulty of burning out the binder from the electrodes in the center of the MLC without excessive oxidation of the outer electrodes.

Accordingly, a copper electrode paste has been developed based on an acrylic binder, which avoids the burnout problem associated with ethyl cellulose binders and which has excellent printing characteristics at low metal laydowns ($\simeq$2 micrometers fired).

The major difficulty of using acrylic binders for screen printable electrode pastes is that the paste sticks to the screen and/or flows excessively unless low binder levels are used. At low binder levels, the solids content of the paste is high and the print deposit is usually too thick for MLC electrodes. This problem has been solved by formulating the paste with a poor solvent for acrylics, $\beta$-terpineol. The methyl methacrylates other than butyl methacrylate cannot be dissolved in $\beta$-terpineol even at concentrations as low as 10% by weight. However, it was found that the butyl methacrylate was readily soluble in the 20-30 wt. % concentration range. Pastes made with such a vehicle, including a small amount of surfactant (RK-500) [1], gave very good performance with fine copper powder, such as Copper Powder #10 from Metz Corp, particularly when used with a 0.037 mm (400-mesh) screen. Excellent electrode uniformity at very thin layers ($\leq$3.5 $\mu$m) was achieved in fired MLC's with as many as 25 electrodes.

EXAMPLES

Example 1

A first ceramic flux was made from a blend of 100.0 g boric acid. 547.5 g $BaCO_3$ and 40.0 g $MnCO_3$. These were precursors for a mixture of $3BaO.B_2O_3$ and $BaO.MnO_2$. The blended components were calcined at 700° C for 5 hours and then ball milled to a particle size ($D_{50}$) <2 $\mu$m. The flux was then mixed with 85.6 g $BaTiO_3$, 10.0 g $BaZrO_3$ 1.0 g $Nd_2O_3$, 0.79 g $Nb_2O_5$, and 0.88 g $Li_2CO_3$, together with acrylic binder solution (Du Pont 5200) [2], and milled overnight. Ceramic tape was cast from the slurry and MLC capacitors (size 1209 i.e. 0.12 inch x 0.09 inch (0.3 mm x 0.23 mm)) were made using copper paste of 1 $\mu$m copper powder dispersed in a 20% solution of Du Pont Elvacite 2044 [3] in $\beta$-terpineol. Some capacitors had five active layers (6 electrodes), others had 15 active layers (16 electrodes): the thickness was such that approximately 25 micrometers dielectric layers would result on firing. These capacitors were fired at 1050-1065° C in an atmosphere of $N_2$ + $H_2$ + $CO_2$ as described above. After firing, the chips were lightly abraded to remove a slight oxide film on the terminations and then copper termination paste (Du Pont 7001D) [4] was applied and fired in nitrogen at 700° C. Leads were attached with Pb-Sn solder in the usual way. Capacitance was 0.06 $\mu$F on the 5 layer parts and 0.15 $\mu$F for those with 15 layers with Y5V TCC. Insulation resistance exceeded 15,000 $\Omega$F on both sets of MLC's and DF was less than 2%. Dielectric constant appeared to be somewhat lower with the larger number of electrodes (6000 vs. 7600) indicating the

[1] RK-500 is a tradename of GAF for phosphate ester surfactants.

[2] 5200 is a tradename of E. I. du Pont de Nemours and Company, Inc.. for acrylic binder casting solutions.

[3] Elvacite 2044 is a tradename of E. I. du Pont de Nemours and Company for butyl-methacrylate resins.

[4] 7001D is tradename of E. I. du Pont de Nemours and Company, Inc. for thick film copper pastes.

possibility of some interaction of the copper electrodes with the dielectric. Nevertheless, excellent stability was obtained with 15 layer parts when tested at 200 V/25.4 $\mu$m (200 V/mil) at 125°C for 20 hours, with zero failures out of 22 parts tested.

The composition of Example 1 has the following properties:

| | |
|---|---|
| S | = 1.06 |
| $N_D$ | = 1.3% (Nb, Nd) |
| $N_C/N_D$ | = 0.29 (Mn/Nb + Nd) |
| $N_G$ | = 1.8% (B) |
| and $N_M$ | = 2.7% (Li). |

Example 2

A second ceramic flux was made from a blend of 45.35 wt. % ZnO, 23.0% boric acid. 20.0% $BaCO_3$ and 11.65% $MnCO_3$. These compounds were precursors for a mixture of $3ZnO.B_2O_3$ and $BaO.MnO_2$. The blended components were calcined at 700°C for 5 hours and then milled to a particle size ($D_{50}$) <2 $\mu$m. Ceramic tape was prepared from a slip consisting of a blend of 2.83 g flux, 85.0 g $BaTiO_3$, 10.0 g $BaZrO_3$, 2.0 g $Nd_2O_3$ and 0.5 g $Li_2CO_3$ using the same procedure as in Example 1 above. MLC's with copper electrodes were made with five active layers, others with 25 active layers.

Capacitance was 0.06 $\mu$F for the 5 layer parts and 0.42 $\mu$F for those with 25 layers. Insulation resistance was 20,000 $\Omega$F on both sets of MLC's and DF was less than 2%. Dielectric constant was 8500-9000 on the 5 layer MLC's and 8200-8600 on those with 25 layers. The composition of Example 2 has the following properties:

| | |
|---|---|
| S | = 1.03 |
| $N_D$ | = 1.4% (Nd) |
| $N_C/N_D$ | = 0.29 (Mn/Nd) |
| $N_G$ | = 1.5% (B) |
| and $N_M$ | = 3.8% (Zn, Li). |

Examples 3-17

Except for Examples 3-6, for which single plate capacitors were made instead of MLC's, similar procedures to those described above were used in the following examples which further illustrate the invention. Compositions are given in Table 1 and electrical data in Table 2.

Examples 3 and 4 show that addition of modifier oxide (lithium oxide or precursor) to the glass forming oxide (boron oxide) improved sinterability but K was low without donor additions. Examples 5-9 illustrate that the addition of donor dopants to barium titanate ceramics tends to produce a semiconducting material when fired in atmospheres of low oxygen content if S is less than 1.03 and/or the acceptor level is too low. Examples 10-14 describe how a variety of donors can be used, either singly or in combination with one another. Also, Example 10 shows that the other alkaline earth oxides can be included in the flux or the ceramic. Finally, Examples 15-17 describe the use of flux compositions containing silica or alumina.

## Table 1

## Dielectric Compositions

| Ex.No. | Composition (Mole) | | | | | |
|---|---|---|---|---|---|---|
| | $N_A$ | | $N_B$ | | $N_D$ | |
| | BaO | CaO | $TiO_2$ | $ZrO_2$ | moles | Donor Ions |
| 3 | 0.3730 | 0.0558 | 0.3730 | 0.0558 | - | |
| 4 | 0.3730 | 0.0558 | 0.3730 | 0.0558 | - | - |
| 5 | 0.3670 | 0.0558 | 0.3670 | 0.0558 | 0.0038 | $Nb^{5+}$ |
| | | | | | 0.0037 | $Nd^{3+}$ |
| 6 | 0.3670 | 0.0558 | 0.3670 | 0.0558 | 0.0038 | $Nb^{5+}$ |
| | | | | | 0.0037 | $Nd^{3+}$ |
| 7 | 0.4189 | - | 0.3644 | 0.0362 | 0.0119 | $Nb^{5+}$ |
| 8 | 0.3877 | 0.0363 | 0.3755 | 0.0363 | 0.0119 | $Nd^{3+}$ |
| 9 | 0.4240 | - | 0.3644 | 0.0362 | 0.0119 | $Nb^{5+}$ |
| 10 | 0.3877 | 0.0363 | 0.3755 | 0.0363 | 0.0119 | $Nd^{3+}$ |
| 11 | 0.4290 | - | 0.3644 | 0.0362 | 0.0119 | $Nb^{5+}$ |
| 12 | 0.4302 | - | 0.3670 | 0.0362 | 0.0059 | $Nb^{5+}$ |
| | | | | | 0.0059 | $Ce^{3+-}$ |
| 13 | 0.4302 | - | 0.3670 | 0.0362 | 0.0059 | $Nb^{5+}$ |
| | | | | | 0.0059 | $Sm^{3+}$ |
| 14 | 0.4302 | - | 0.3670 | 0.0362 | 0.0119 | $Nd^{3+}$ |
| 15 | 0.4088 | - | 0.3730 | 0.0307 | 0.0119 | $Nd^{3+}$ |
| 16 | 0.4099 | - | 0.3730 | 0.0307 | 0.0119 | $Nd^{3+}$ |
| 17 | 0.4083 | - | 0.3730 | 0.0307 | 0.0119 | $Nd^{3+}$ |

## Table 1 (continued)

| Ex.No. | Composition (Mole) | | | | | | $\frac{N_C}{N_D}$ | S |
|---|---|---|---|---|---|---|---|---|
| | $N_C$ | $N_G$ | | $N_M$ | | | | |
| | $Mn^{2+}$ | $BO_{1.5}$ | % | moles | modifier | % | | |
| 3 | – | 0.0410 | 4.6 | – | – | 0 | 0 | 1.00 |
| 4 | – | 0.0410 | 4.5 | 0.0135 | Li | 1.5 | 0 | 1.00 |
| 5 | – | 0.0410 | 4.5 | 0.0068 | Li | 0.8 | 0 | 1.00 |
| 6 | – | 0.0410 | 4.5 | 0.0135 | Li | 1.5 | 0 | 1.00 |
| 7 | 0.0035 | 0.0126 | 1.4 | 0.0135 | Li | 3.6 | 0.29 | 1.01 |
| | | | | 0.0190 | Zn | | | |
| 8 | 0.0020 | 0.0275 | 3.1 | 0.0238 | Li | 2.7 | 0.17 | 1.05 |
| 9 | 0.0035 | 0.0126 | 1.5 | 0.0135 | Li | 3.7 | 0.29 | 1.02 |
| | | | | 0.0190 | Zn | | | |
| 10 | 0.0037 | 0.0275 | 3.1 | 0.0238 | Li | 2.7 | 0.31 | 1.05 |
| 11 | 0.0035 | 0.0126 | 1.4 | 0.0135 | Li | 3.7 | 0.29 | 1.03 |
| | | | | 0.0190 | Zn | | | |
| 12 | 0.0034 | 0.0158 | 1.8 | 0.0238 | Li | 2.7 | 0.29 | 1.06 |
| 13 | 0.0034 | 0.0158 | 1.8 | 0.0238 | Li | 2.7 | 0.29 | 1.06 |
| 14 | 0.0034 | 0.0158 | 1.8 | 0.0238 | Li | 2.7 | 0.29 | 1.09 |
| 15 | 0.0035 | 0.0048(B) | 0.8 | 0.0135 | Li | 3.3 | 0.29 | 1.03 |
| | | 0.0024(Si) | 0.8 | 0.0146 | Zn | | | |
| 16 | 0.0062 | 0.0082 | 1.0 | 0.0068 | Li | 2.7 | 0.52 | 1.03 |
| | | | | 0.0123 | Zn | | | |
| | | | | 0.0041 | Al | | | |
| 17 | 0.0046 | 0.0082 | 1.0 | 0.0135 | Li | 3.5 | 0.29 | 1.03 |
| | | | | 0.0123 | Zn | | | |
| | | | | 0.0041 | Al | | | |

EP 0 275 053 B1

## Table 2

### Capacitor Properties

| Ex. No. | Number of Electrodes | K at 25°C | DF | IR (ΩF) 25°C | IR (ΩF) 125°C | TCC |
|---|---|---|---|---|---|---|
| 3 | Plate capacitor | -- | Porous | -- | | |
| 4 | Plate capacitor | 1500 | 2.1 | <15 | <15 | -- |
| 5 | Plate capacitor | -- | Semiconducting | -- | | |
| 6 | Plate capacitor | -- | Semiconducting | -- | | |
| 7 | 6 | -- | Semiconducting | -- | | |
| 8 | 6 | -- | Semiconducting | -- | | |
| 9 | 6 | 6500 | 1.7 | <1 | <1 | Y5V |
| 10 | 6 | 7100 | 3.2 | 12K | 200 | Y5V |
| 11 | 6 | 6400 | 0.5 | 25K | 1000 | Y5V |
| 12 | 6 | 6500 | 1.2 | 20K | 2000 | Y5V |
| 13 | 6 | 5600 | 0.7 | 20K | 2000 | ~Y5U |
| 14 | 6 | 5500 | 1.2 | 40K | 1500 | Y5U |
| 15 | 6 | 5600 | 0.6 | 40K | 1500 | Y5V |
| 16 | 6 | 5400 | 0.6 | 10K | 300 | Y5V |
| 17 | 6 | 8500 | 0.6 | 20K | 2000 | Y5V |

## Claims

1. A dielectric composition consisting essentially of a donor-doped BaTiO$_3$ having an intergranular phase of flux containing both glass-forming and glass-modifying ions, characterized stoichiometrically by the following criteria:

    (a) The ratio of A site ions to B site ions in the doped BaTiO$_3$,

$$\frac{N_A + N_D{}^{3+}}{N_B + N_D{}^{5+} + N_C} = 1.02 - 1.10$$

wherein
N$_A$ is the number of divalent A site ions selected from Ba$^{2+}$, Ca$^{2+}$, Sr$^{2+}$, Mg$^{2+}$ and mixtures thereof;

10

$N_B$ is the number of tetravalent B site ions selected from $Ti^{4+}$, $Zr^{4+}$ and mixtures thereof;

$N_C$ is the number of donor compensating ions selected from $Mn^{2+}$, $Mn^{3+}$, $Ni^{2+}$, $Cr^{3+}$, $Co^{2+}$, $Co^{3+}$, $Ga^{3+}$ and mixtures thereof;

$N_D$ is the number of donor ions of charge 3+ or 5+ selected from trivalent rare earth ions and mixtures thereof or $Ta^{5+}$, $Nb^{5+}$, and mixtures thereof, respectively;

(b) The ratio of donor ions ($N_D$) to total cations ($N_T$), $N_D/N_T$ = 0.5-3.0%, wherein $N_T = N_A + N_B + N_C + N_D + N_G + N_M$;

(c) $N_C/N_D$ is at least 0.20;

(d) The ratio of glass-forming ions ($N_G$) to total cations ($N_T$), $N_G/N_T$ = 0.5-3.5% wherein $N_G$ is the number of glass forming ions selected from $B^{3+}$, $Si^{4+}$, $Ge^{4+}$, $P^{5+}$ and mixtures thereof;

(e) The ratio of glass-modifying ions ($N_M$) to the total number of cations ($N_T$), $N_M/N_T$ = 1.5-5.0%, wherein $N_M$ is the number of glass modifying ions elected from $Li^+$, $Cu^+$, $Zn^{2+}$ and mixtures thereof.

2. A composition for preparing by firing in a low oxygen-containing atmosphere the donor-doped $BaTiO_3$ of claim 1 having an intergranular layer of flux containing both glass-forming and glass-modifying ions consisting essentially of an admixture of finely divided particles of oxides of $BaTiO_3$, oxides of glass-forming cations, oxides of glass-modifying cations. A site dopant oxide(s), B site dopant oxide(s), oxides of donor ions and oxides of donor compensating ions, characterized stoichiometrically by the following criteria:

(a) The molar ratio of A site oxide(s) to B site oxide(s) is 1.02-1.10;

(b) The molar ratio of donor oxide(s) to total oxide(s) is 0.5 to 3.0%;

(c) The molar ratio of donor-compensating oxide(s) to donor oxide(s) is at least 0.20;

(d) The molar ratio of glass-forming oxide(s) to total oxide(s) is 0.5 to 3.5%; and

(e) The molar ratio of of the glass-modifying oxide(s) to the total oxide(s) is 1.5-5.0%.

**Revendications**

1. Une composition diélectrique consistant essentiellement en $BaTiO_3$ dopé par un donneur, présentant une phase intergranulaire de fondant contenant tant des ions vitrifiables que des ions modifiant le verre, caractérisée d'un point de vue stoechiométrique par les critères suivants:

a) le rapport ions du site A/ions du site B, dans le $BaTiO_3$ dopé, est:

$$\frac{N_A + N_D^{3+}}{N_B + N_D^{5+} + N_C} = 1,02 - 1,10$$

dans laquelle:

$N_A$  est le nombre d'ions divalents du site A, choisis parmi $Ba^{2+}$, $Ca^{2+}$, $Sr^{2+}$, $Mg^{2+}$ et leurs mélanges;

$N_B$  est le nombre d'ions tétravalents du site B, choisis parmi $Ti^{4+}$, $Zr^{4+}$ et leurs mélanges;

$N_C$  est le nombre d'ions compensateurs donneurs, choisis parmi $Mn^{2+}$, $Mn^{3+}$, $Ni^{2+}$, $Cr^{3+}$, $Co^{2+}$, $Co^{3+}$, $Ga^{3+}$ et leurs mélanges;

$N_D$  est le nombre des ions donneurs de charge 3+ ou 5+, choisis respectivement parmi les ions trivalents des terres rares et leurs mélanges, et $Ta^{5+}$, $Nb^{5+}$ et leurs mélanges;

b) le rapport ions donneurs ($N_D$)/cations totaux ($N_T$) est $N_D/N_T$ = 0,5-3,5%, où:

$N_T = N_A + N_B + N_C + N_D + N_G + N_M$

c) $N_C/N_D$ vaut au moins 0,20;

d) le rapport ions vitrifiables ($N_G$)/cations totaux ($N_T$) est $N_G/N_T$ = 0,5-3,5%, où $N_G$ est le nombre d'ions vitrifiables choisis parmi $B^{3+}$, $Si^{4+}$, $Ge^{4+}$, $P^{5+}$ et leurs mélanges;

e) le rapport ions modifiant le verre ($N_M$)/nombre total de cations ($N_T$) est $N_M/N_T$ = 1,5-5,0%, où $N_M$ est le nombre d'ions modifiant le verre, choisis parmi $Li^+$, $Cu^+$, $Zn^{2+}$ et leurs mélanges.

2. Une composition destinée à préparer, par cuisson dans une atmosphère à faible teneur en oxygène, le $BaTiO_3$ dopé par un donneur selon la revendication 1, qui comporte une couche intergranulaire d'un fondant contenant tant des ions vitrifiables que des ions modifiant le verre, constituée essentiellement d'un mélange de particules finement divisées d'oxydes du type BaTiO₃, d'oxydes de cations vitrifiables, d'oxydes de cations modifiant le verre, d'un ou plusieurs oxydes dopants du site A, d'un ou plusieurs oxydes dopants du site B, d'oxydes d'ions donneurs et d'oxydes d'ions compensateurs de donneurs, caractérisée d'un point de vue stoechiométrique par les critères suivants:

a) la proportion molaire oxyde(s) du site A/oxyde(s) du site B est de 1,02-1,10;

b) la proportion molaire oxyde(s) donneur(s)/oxyde(s) est de 0,5 à 3,0%;

c) la proportion molaire oxyde(s) compensateur(s) de donneurs/oxyde(s) donneur(s) est d'au moins 0,20;

d) la proportion molaire oxyde(s) vitrifiable(s)/oxyde(s) total(aux) est de 0,5 à 3,5%; et

e) la proportion molaire oxyde(s) modifiant le verre/oxyde(s) total(aux) est de 1,5 à 5,0.

## Patentansprüche

1. Dielektrische Zusammensetzung, bestehend im wesentlichen aus einem mit einem Donator dotierten BaTiO₃ mit einer interkristallinen Flußmittel-Phase, die sowohl glasbildende als auch glasmodifizierende Ionen enthält, stöchiometrisch gekennzeichnet durch die folgenden Kriterien:

(a) Das Verhältnis der Ionen der A-Zentren zu den Ionen der B-Zentren in dem dotierten BaTiO₃

$$\frac{N_A + N_D^{3+}}{N_B + N_D^{5+} + N_C} = 1,02 \quad - \quad 1,10 \quad ,$$

worin

$N_A$     die Zahl der zweiwertigen Ionen der A-Zentren ist, die aus $Ba^{2+}$, $Ca^{2+}$, $Sr^{2+}$, $Mg^{2+}$ und deren Mischungen ausgewählt sind;

$N_B$     die Zahl der vierwertigen Ionen der B-Zentren ist, die aus $Ti^{4+}$, $Zr^{4+}$ und deren Mischungen ausgewählt sind;

$N_C$     die Zahl der donator-kompensierenden Ionen ist, die aus $Mn^{2+}$, $Mn^{3+}$, $Ni^{2+}$, $Cr^{3+}$, $Co^{2+}$, $Co^{3+}$, $Ga^{3+}$ und deren Mischungen ausgewählt sind;

$N_D$     die Zahl der Donator-Ionen der Ladungen 3+ oder 5+ ist, die aus dreiwertigen Seltenerdmetall-Ionen und deren Mischungen bzw. $Ta^{5+}$, $Nb^{5+}$ und deren Mischungen ausgewählt sind;

(b) das Verhältnis der Donator-Ionen ($N_D$) zu den Kationen insgesamt ($N_T$)

$N_D/N_T = 0,5 - 3,0$ %, worin

$N_T = N_A + N_B + N_C + N_D + N_G + N_M$;

(c) $N_C/N_D$ wenigstens 0,20 beträgt;

(d) das Verhältnis der glasbildenden Ionen ($N_G$) zu den Kationen insgesamt ($N_T$) $N_G/N_T = 0,5 - 3,5$ %, worin $N_G$ die Zahl der glasbildenden Ionen ist, die aus $B^{3+}$, $Si^{4+}$, $Ge^{4+}$, $P^{5+}$ und deren Mischungen ausgewählt sind;

(e) das Verhältnis der glasmodifizierenden Ionen ($N_M$) zu der Zahl der Kationen insgesamt ($N_T$) $N_M/N_T = 1,5 - 5,0$ %, worin $N_M$ die Zahl der glasmodifizierenden Ionen ist, die aus $Li^+$, $Cu^+$, $Zn^{2+}$ und deren Mischungen ausgewählt sind.

2. Zusammensetzung zur Herstellung, durch Brennen in einer schwach sauerstoffhaltigen Atmosphäre, des mit einem Donator dotierten BaTiO₃ nach Anspruch 1 mit einer interkristallinen Flußmittel-Phase, die sowohl glasbildende als auch glasmodifizierende Ionen enthält, bestehend im wesentlichen aus einem Gemisch fein zerteilter Teilchen der Oxide von BaTiO₃, der Oxide glasbildender Kationen, der Oxide glasmodifizierender Ionen, des Oxids/der Oxide von Dotierungsmitteln der A-Zentren, des Oxids/der Oxide von Dotierungsmitteln der B-Zentren, der Oxide von Donator-Ionen und der Oxide von donator-kompensierenden Ionen, stöchiometrisch gekennzeichnet durch die folgenden Kriterien:

(a) Das Stoffmengen-Verhältnis ("Mol-Verhältnis") des Oxids/der Oxide der A-Zentren zu dem Oxid/den Oxiden der B-Zentren beträgt 1,02 - 1,10;

(b) das Stoffmengen-Verhältnis des Donator-Oxids/der Donator-Oxide zu dem Oxid/den Oxiden insgesamt beträgt 0,5 bis 3,0 %;

(c) das Stoffmengen-Verhältnis des donator-kompensierenden Oxids/der donator-kompensierenden

EP 0 275 053 B1

Oxide zu dem Donator-Oxid/den Donator-Oxiden beträgt wenigstens 0,20;

(d) das Stoffmengen-Verhältnis des glasbildenden Oxids/der glasbildenden Oxide zu dem Oxid/den Oxiden insgesamt beträgt 0,5 bis 3,5 %; und

(e) das Stoffmengen-Verhältnis des glasmodifizierenden Oxids/der glasmodifizierenden Oxide zu dem Oxid/den Oxiden insgesamt beträgt 1,5 - 5,0 %.